## Europäisches Patentamt
## European Patent Office
## Office européen des brevets

(19)

(11) Veröffentlichungsnummer: **0 089 009**
**B1**

(12) **EUROPÄISCHE PATENTSCHRIFT**

(45) Veröffentlichungstag der Patentschrift:
**15.01.86**

(51) Int. Cl.⁴: **C 01 B 33/02, C 22 B 9/02**

(21) Anmeldenummer: **83102340.3**

(22) Anmeldetag: **10.03.83**

(54) **Verfahren zur Entfernung des Schlackenanteils aus Schmelzmischungen von Schlacke und Silicium.**

(30) Priorität: **11.03.82 DE 3208877**

(43) Veröffentlichungstag der Anmeldung:
**21.09.83 Patentblatt 83/38**

(45) Bekanntmachung des Hinweises auf die Patenterteilung:
**15.01.86 Patentblatt 86/3**

(84) Benannte Vertragsstaaten:
**BE DE FR IT**

(56) Entgegenhaltungen:
**DE-C-1 022 806**
**US-A-2 355 130**
**US-A-3 281 238**

(73) Patentinhaber: **HELIOTRONIC Forschungs- und Entwicklungsgesellschaft für Solarzellen-Grundstoffe mbH, Johannes- Hess- Strasse 24, D-8263 Burghausen (DE)**

(72) Erfinder: **Dietl, Josef, Dr., Dipl.- Phys., Am Bärenbach 17, D-8262 Neuötting (DE)**
Erfinder: **Kotilge, Jörg, Dipl.- Ing., Robert- Koch-Strasse 73, D-8263 Burghausen (DE)**

## Beschreibung

Gegenstand der Erfindung ist ein Verfahren zur Entfernung des Schlackenanteils aus Schmelzmischungen von Schlacke und Silicium.

Auf dem Gebiet der photovoltaischen Stromerzeugung sind derzeit die Solarzellen auf Siliciumbasis für eine breite terrestrische Anwendung viel zu teuer. Dies liegt hauptsächlich an der kostspieligen Herstellung von elementarem Silicium durch thermische Zersetzung gasförmiger Silane auf erhitzten Trägerkörpern. Zur Verringerung der Kosten finden daher weniger aufwendige Herstellungsverfahren von elementarem Silicium steigendes Interesse. Solche Verfahren sind beispielsweise die aluminothermische Reduktion von Quarz in einem als Reaktionsmedium dienenden Schlackensystem oder die Reinigung von elementarem Silicium durch Schlackenextraktion. Dabei liegt jedoch ein Nachteil darin, daß das Silicium gewöhnlich in Form von Schmelztropfen unterschiedlicher Größe mit der Schlacke vermischt ist. Wegen der geringen Dichteunterschiede verläuft die für die Weiterverarbeitung unerläßliche Trennung von Schlacke und Silicium nur langsam; entsprechend läßt sich das Silicium dann nur unter großem Zeitaufwand isolieren und aufarbeiten.

Aufgabe der Erfindung war es daher, ein Verfahren anzugeben, das die rasche Entfernung des Schlackenanteils aus Schmelzmischungen von Silicium und Schlacke gestattet.

Gelöst wird diese Aufgabe durch ein Verfahren, welches dadurch gekennzeichnet ist, daß derartige Schmelzmischungen einer hydrostatischen Druckdifferenz gegenüber einem von ihnen durch eine oder mehrere, mit polygon-, kreis- bis schlitzförmigen Öffnungen von bis zu 10 mm lichter Weite versehene, teildurchlässige Trennwände aus Graphit oder Siliciumcarbid abgetrennten Raum unterworfen werden.

Unerwartet wurde nämlich gefunden, daß derartige Trennwände bei Schmelzmischungen aus Silicium und Schlacke nur für die Schlacke durchlässig sind, während das Silicium zurückgehalten wird. Hingegen werden bei Abwesenheit von Schlacke die Trennwände leicht auch von Silicium benetzt und ungehindert durchdrungen.

Ein solches Verhalten ist bei vielen der bei der Siliciumherstellung und -aufbereitung beispielsweise als Schutzschmelze, als Reaktionsmedium oder als Extraktionsmittel gebräuchlichen Schlackenmaterialien festzustellen. So lassen sich nach dem erfindungsgemäßen Verfahren besonders gut Schlacken auf Basis der Silikate und Fluoride von Magnesium, Kalzium, Strontium und Barium einzeln oder im Gemisch von Silicium abtrennen. Dies gilt auch dann, wenn die Schlacke weitere Komponenten, wie etwa bei der aluminothermischen Reduktion von Quarz entstandenes Aluminiumoxid oder aus Silicium extrahierte Verunreinigungen gelöst enthält. Das gleiche Verhalten zeigen auch sulfidische Schlacken, insbesondere Aluminiumsulfid in Schmelzmischungen mit Si-Al-Mischschmelzen.

Die Arbeitstemperatur wird zweckmäßig zumindest vor und während des Trennprozesses so gewählt, daß ein Ausfrieren von Schlackenkomponenten oder des Siliciums aus der Schmelzmischung und die Bildung unerwünschter Ablagerungen in den Öffnungen der Trennwand verhindert wird. Dementsprechend liegt die Untergrenze des geeigneten Temperaturbereiches in der Nähe des Schmelzpunktes von Silicium, also bei ca. 1420°C. In der Regel wird man jedoch eine Schlacke verwenden, deren Schmelzpunkt oberhalb dem des Siliciums liegt, so daß die Arbeitstemperatur dementsprechend höher zu wählen ist. Dann kann nämlich in besonders günstiger Weise nach abgeschlossener Phasentrennung durch Absenken der Arbeitstemperatur in einen Bereich unterhalb des Schlackenschmelzpunktes und oberhalb des Siliciumschmelzpunktes die Schlacke zum Ausfrieren gebracht werden, während sich die noch flüssige Siliciumphase beispielsweise durch Abgießen oder Abhebern leicht abtrennen läßt. Die Obergrenze der Arbeitstemperatur wird im Grunde nur durch die Temperaturbeständigkeit und Flüchtigkeit der Schlacke und des Materials bestimmt, aus dem der Schmelzenbehälter und die Trennwände gefertigt sind. Beispielsweise hat sich bei Verwendung einer Schlacke aus 85 Gew.% Kalziumsilikat/15 Gew.% Kalziumfluorid in einem Behältnis aus Graphit mit Graphittrennwand ein Arbeitstemperaturbereich von 1560 bis 1600°C als günstig erwiesen.

Die in den Trennwänden aus Graphit oder Siliciumcarbid befindlichen Öffnungen gestatten bei Schmelzmischungen aus Silicium und Schlacke nur den Durchtritt der Schlacke, nicht aber des Siliciums. Diese Öffnungen können verschiedene Geometrie aufweisen; beispielsweise kommen kreisförmige, ovale, elliptische, aber auch drei- und mehreckige, vor allem aber auch schlitzförmige Querschnitte in Frage. Unabhängig von ihrer Längsausdehnung etwa bei schlitzartiger Geometrie bleiben diese Öffnungen für Silicium undurchlässig, wenn ihre lichte Weite 10 mm nicht übersteigt. Als besonders vorteilhaft hat sich der Bereich von 2 bis 8 mm lichter Weite erwiesen. Prinzipiell kann jedoch wegen des hohen Durchdringungsvermögens insbesondere der Erdalkalisilikat/Fluorid-Mischschlacken die lichte Weite der Öffnungen bis in den Bereich von ca. 100 mm reduziert werden obwohl sich dann wegen der geringeren Durchtrittsgeschwindigkeit der Schlacke die Phasentrennung deutlich verlangsamt. Die Wandstärke der Trennwände bleibt beispielsweise in dem gebräuchlichen Bereich von 10 bis 30 mm im Hinblick auf die teildurchlässige Wirkung weitgehend ohne Einfluß und läßt sich somit ohne Schwierigkeit den Erfordernissen der Stabilität anpassen. Der von der Schmelzmischung durch die Trennwand oder mehrere Trennwände abgeteilte Raum sowie die Trennwände selbst können in vielfältiger Weise gestaltet werden, je nachdem, auf welche Art die hydrostatische Druckdifferenz gegenüber der Schmelzmischung erzeugt wird. Die nachstehenden Ausführungsbeispiele dienen daher lediglich der Illustration des Erfindungsgedankens und sind nicht im Sinne einer Beschränkung zu verstehen.

Beispielsweise kann in einem Behältnis, etwa einem Graphittiegel, durch eine mit Löchern versehene Trennwand aus Graphit ein Raum abgeteilt sein, in dem sich seitlich oder im Boden eine Abflußmöglichkeit befindet. Dies kann z.B. durch eine zwischen zwei Seitenwände eingezogene Trennwand geschehen, aber auch etwa durch einen zylinderförmigen, über der Ausflußmöglichkeit befindlichen Aufsatz, oder durch eine die Ausflußmöglichkeit abdeckende Trennwand. Zweckmäßig wird bei derartigen Anordnungen ein Abflußregulans vorgesehen, das durch Steuerung der abfließenden Schlackenmenge ein zu rasches Absinken des Schlackenspiegels und damit die Gefahr des vorzeitigen Abfließens von Silicium verhindert. Geeignet ist für diesen Zweck beispielsweise ein — zweckmäßig an der Außenseite des Behältnisses angebrachter — Schieber, der die Abflußmöglichkeit nach Abfließen der gesamten Schlackenmenge verschließen kann, so daß in dem Behältnis nur noch Silicium zurückbleibt. Ebenso läßt sich z.B. eine in die Schlacke eintauchende Stopfenstange verwenden, die zum Verschließen der Abflußmöglichkeit, aber auch zum Dosieren der abfließenden Schlackenmenge geeignet ist.

Wird bei derartigen Anordnungen eine Schmelzmischung aus Silicium und Schlacke in den abflußlosen Teil des Behältnisses eingefüllt, so wird die Schlacke aufgrund der hydrostatischen Druckdifferenz durch die Trennwand durchtreten und durch die Abflußmöglichkeit abfließen, während das Silicium im Behältnis zurückgehalten wird. Nachdem die gesamte Schlackenmenge abgeflossen ist und das Silicium durch die Trennwand durchzutreten und abzufließen beginnt — dies ist z.B. wegen des Farbunterschiedes zwischen Silicium- und Schlackenschmelze mit bloßem Auge zu erkennen — kann beispielsweise durch Schließen des Abflusses das nahezu schlackenfreie Silicium im Behältnis zurückgehalten und weiterverarbeitet werden.

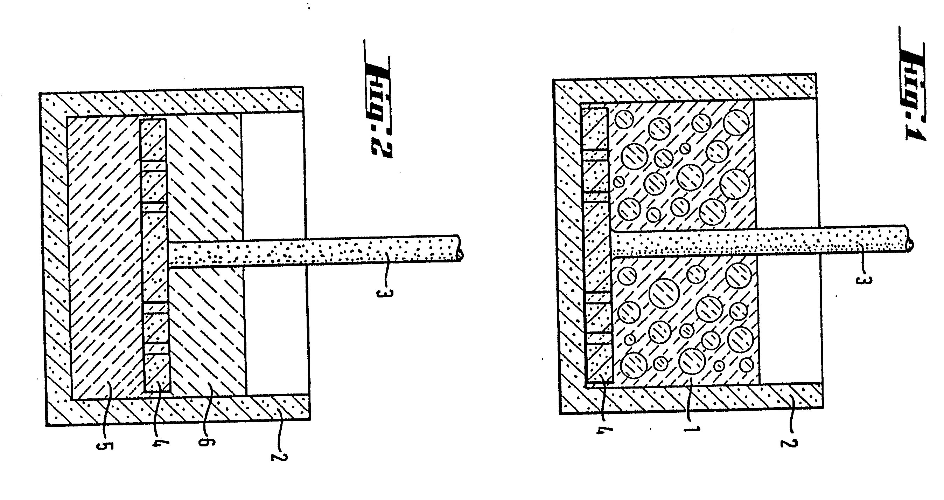

Ein anderes Prinzip ist in den Figuren 1 und 2 dargestellt. Es besteht darin, die Trennwände in entsprechenden Behältnissen beweglich zu gestalten. Befindet sich, wie in Figur 1 gezeigt, die Schmelzmischung 1 beispielsweise in einem Behältnis 2, auf dessen Boden zunächst eine beispielsweise mittels einer Graphitstange 3 nach oben bewegliche, die Grundfläche des Behältnisses bedeckende Trennwand 4 aufliegt, und wird diese Trennwand dann nach oben bewegt, so wird, wie in Figur 2 dargestellt, der Schlackenanteil 5 der Schmelzmischung durch die Trennwand hindurchtreten und unterhalb von ihr verbleiben, während sich darüber das Silicium 6 ansammelt. Nach abgeschlossener Phasentrennung kann beispielsweise durch Senken der Arbeitstemperatur die Schlacke ausgefroren werden, so daß nur die oberhalb der Trennwand befindliche Siliciumphase flüssig bleibt und z.B. durch Abgießen, Abschöpfen oder Abhebern abgetrennt werden kann. Nach dem selben Prinzip kann auch eine Anordnung mit einer eine Seitenwand bedeckenden, horizontal beweglichen Trennwand zur Phasentrennung eingesetzt werden. Als Grenzfall einer beweglichen Trennwand kann beispielsweise in einem zylinderförmigen Behältnis eine um die Zylinderachse rotierende Trennwand, etwa von der Größe der Fläche zwischen Zylinderachse und Seitenwand, eingesetzt werden. Das in der Schmelzmischung befindliche Silicium sammelt sich dann vor der rotierenden Trennwand an und kann beispielsweise nach Anhalten und Entfernen der rotierenden Trennwand und Ausfrieren der Schlacke abgegossen oder abgehebert werden.

Eine weitere Möglichkeit besteht darin, aus den erfindungsgemäßen Trennwänden aufgebaute, hohle Verdrängungskörper in die Schmelzmischung einzutauchen. Dann dringt die Schlacke in die Verdrängungskörper ein und kann mit ihnen, beispielsweise nach Ausfrieren, entfernt werden, wobei schmelzflüssiges Silicium zur Weiterverarbeitung zurückbleibt.

Weiterhin gibt es auch die Möglichkeit, das Silicium mit Hilfe von den erfindungsgemäßen Trennwände enthaltenden Schöpfgeräten aus der Schmelzmischung abzuschöpfen. Besonders bewährt hat sich dabei die Verwendung von doppelwandigen Schöpfgeräten beispielsweise Schöpfkellen, bei denen die Innenwand aus den erfindungsgemäßen Trennwänden besteht, während die durch einen den Abfluß der Schlacke ermöglichenden Zwischenraum davon getrennte Außenwand sowohl für die Schlacke als auch für Silicium undurchlässig ist. Beim Schöpfvorgang verbleibt dann im Innenraum der Schöpfkelle das Silicium, während der zwischen Außenwand und Trennwand befindliche Zwischenraum sich mit Schlacke füllt und so ein Ausfließen des Siliciums aus dem Innenraum verhindert. Nach Ausfrieren dieses Schlackenteils kann das schmelzflüssig gebliebene Silicium dann nahezu schlackenfrei aus dem Innenraum der Schöpfkelle abgegossen werden.

Diese hier aufgezeigten Ausführungsformen des erfindungsgemäßen Verfahrens bieten somit, auch in anderen denkbaren Ausgestaltungen, eine einfache und rasche Möglichkeit zur Abtrennung des Schlackenanteils aus Schmelzmischungen von Schlacke und Silicium.

**Beispiel**

In einer Figur 1 entsprechenden Anordnung, bestehend aus einem Schmelztiegel aus Feinstkorngraphit und einer dessen Boden bedeckenden, 10 mm dicken, nach oben beweglichen Trennwand aus Feinstkorngraphit, die in Form von zwei konzentrischen Kreisen 6 bzw. 8 Löcher mit 5 mm Durchmesser aufwies, wurde eine Schmelzmischung aus gleichen Teilen Silicium und Schlacke der Zusammensetzung $CaO.SiO_2$ auf einer Temperatur von 1580°C gehalten. Nun wurde mit einer Geschwindigkeit von 10 mm/sec die an einer Graphitstange befestigte Trennwand nach oben bewegt, bis die gesamte Schlackenmenge durch sie durchgetreten und oberhalb von ihr ausschließlich Silicium vorhanden war. Nun wurde die Temperatur auf 1450°C erniedrigt und die Schlacke ausgefroren. Das oberhalb der Trennwand befindliche, schmelzflüssige Silicium wurde durch Abgießen abgetrennt. Anschließend wurde die Temperatur des Schmelztiegels wieder bis über den Schmelzpunkt der verbliebenen Schlacke erhöht und diese aus dem Tiegel abgegossen. Der Tiegel stand anschließend für die Phasentrennung einer weiteren Charge der Schmelzmischung zur Verfügung. Das Verfahren wurde in einer stickstoffgefüllten Schmelzanlage durchgeführt.

## Patentansprüche

1. Verfahren zur Entfernung des Schlackenanteils aus Schmelzmischungen von Silicium und Schlacke, dadurch gekennzeichnet, daß derartige Schmelzmischungen einer hydrostatischen Druckdifferenz gegenüber einem von ihnen durch eine oder mehrere, mit polygon-, kreis- bis schlitzförmigen Öffnungen von bis zu 10 mm lichter Weite versehene, teildurchlässige Trennwände aus Graphit oder Siliciumcarbid abgetrennten Raum unterworfen werden.

2. Verfahren nach Anspruch 1, dadurch gekennzeichnet, daß als Schlackenmaterial Silikate und Fluoride von Magnesium, Kalzium, Strontium und Barium einzeln oder im Gemisch eingesetzt werden.

## Claims

1. Process for the removal of the slag portion from a molten mixture of silicon and slag, characterized in that such a molten mixture is subjected to a hydrostatic pressure difference with respect to a chamber separated from it by one or more semi-permeable separating walls of graphite or silicon carbide provided with polygonal, or circular to slot-shaped, apertures of up to 10 mm inside width.

2. Process according to claim 1, characterized in that silicates and fluorides of magnesium, calcium, strontium and barium, alone or in admixture, are used as the slag material.

## Revendications

1. Procédé pour enlever la scorie de mélanges fondus de silicium et de scories, caractérisé en ce qu'on soumet de tels mélanges fondus à une différence de pression hydrostatique par rapport à un espace qui en est séparé par une ou plusieurs cloisons séparatrices en graphite ou carbure de silicium, semi-perméables et munies d'orifices polygonaux, circulaires, ovales ou en forme de fentes ayant une ouverture pouvant aller jusqu'à 10 mm.

2. Procédé selon la revendication 1, caractérisé en ce qu'on utilise comme scories des silicates et fluorure de magnésium, calcium, strontium et baryum, isolément ou en mélanges.

**Fig.1**

**Fig.2**